# EUROPEAN PATENT APPLICATION

(11) **EP 4 838 260 A1**
(43) Date of publication of application: **11.11.2026**
(21) Application number: 25175082.4
(22) Date of filing: 08.05.2025
(51) Int. Cl.: G01S 13/88, G06F 3/01, G06F 3/16

(54) **MUSIC PLAYER, OPERATING METHOD AND COMPUTER PROGRAM**

(71) Applicant: NXP B.V., 5656 AG Eindhoven (NL)
(72) Inventor: Marotzke, Adrian, 5656 AG Eindhoven (NL); Ibrahim, Mustafa Fuad Rifet, 5656 AG Eindhoven (NL); Fellenberg, Christian, 5656AG Eindhoven (NL)
(74) Representative: Krott, Michel

(57) **Abstract**

In accordance with a first aspect of the present disclosure, a music player is provided, comprising: an ultra-wideband (UWB) transmitter configured to transmit one or more radar signals; a UWB receiver configured to receive one or more reflections of said radar signals; and a processing unit configured to determine at least one periodic movement pattern of a person using the reflections of the radar signals, and to select music for playback in dependence on the determined periodic movement pattern of the person. In accordance with further aspects of the present disclosure, a corresponding method of operating a music player is conceived, and a computer program for executing said method is provided.

## Description

### TECHNICAL FIELD

The present disclosure relates to a music player. Furthermore, the present disclosure relates to a corresponding method of operating a music player, and to a computer program for carrying out said method.

### BACKGROUND

People often listen to music during physical exercise, for example using a portable music player while running on a treadmill. However, the rhythm and tempo of the played music often does not match the periodicity of the exercise which is carried out. Aligning the rhythm and tempo of the played music with said periodicity may help motivating the person exercising, as they will do their best to maintain the current exercise rhythm to keep up with the music. Therefore, wearable sensors or smart exercise devices may be used, which are able to provide information about the periodicity of the exercise to a music player, so that the latter may perform said alignment. However, this may be inconvenient, because the person may have to wear multiple sensors and/or possess multiple expensive exercise devices that support the feature.

### SUMMARY

In accordance with a first aspect of the present disclosure, a music player is provided, comprising: an ultra-wideband (UWB) transmitter configured to transmit one or more radar signals; a UWB receiver configured to receive one or more reflections of said radar signals; and a processing unit configured to determine at least one periodic movement pattern of a person using the reflections of the radar signals, and to select music for playback in dependence on the determined periodic movement pattern of the person.

In one or more embodiments, the periodic movement pattern comprises a tempo and/or rhythm of movement of the person.

In one or more embodiments, selecting music in dependence on the determined periodic movement pattern of the person comprises choosing music having a tempo and/or rhythm that matches the tempo and/or rhythm of movement of the person.

In one or more embodiments, the music player further comprises a storage unit configured to store said music as well as metadata for enabling selecting the music in dependence on the determined periodic movement pattern of the person.

In one or more embodiments, the music player further comprises a playback unit, wherein selecting the music comprises causing the playback unit to play back the music.

In one or more embodiments, selecting the music comprises triggering an external playback device to play back the music by transmitting a playback command through the UWB transmitter or through another transmitter.

In one or more embodiments, the music player further comprises a generative artificial intelligence (AI) unit, wherein selecting the music comprises causing the generative AI unit to generate the music in dependence on the determined periodic movement pattern of the person.

In one or more embodiments, the music player further comprises a single antenna coupled to the UWB transmitter and the UWB receiver.

In one or more embodiments, the music player further comprises multiple antennas coupled to the UWB transmitter and the UWB receiver.

In one or more embodiments, the music player further comprises a beamforming unit configured to direct a beam of said antennas toward the person.

In one or more embodiments, the UWB transmitter and the UWB receiver are integrated into a single UWB transceiver module, or the UWB transmitter and the UWB receiver are implemented as separate physical components of the music player.

In one or more embodiments, the music player is implemented as a portable speaker or a smartphone.

In accordance with a second aspect of the present disclosure, a method of operating a music player is conceived, comprising: transmitting, by an ultra-wideband (UWB) transmitter included in the music player, one or more radar signals; receiving, by a UWB receiver included in the music player, one or more reflections of said radar signals; and determining, by a processing unit included in the music player, at least one periodic movement pattern of a person using the reflections of the radar signals, and selecting music for playback in dependence on the determined periodic movement pattern of the person.

In accordance with a third aspect of the present disclosure, a computer program is provided, comprising executable instructions which, when executed by a music player of the kind set forth, cause said music player to execute a method of the kind set forth.

### DESCRIPTION OF DRAWINGS

Embodiments will be described in more detail with reference to the appended drawings.
Fig. 1 shows an illustrative embodiment of a music player.
Fig. 2 shows an illustrative embodiment of a method of operating a music player.
Fig. 3 shows an illustrative embodiment of a music playback system.
Fig. 4 shows another illustrative embodiment of a music player.
Fig. 5 shows yet another illustrative embodiment of a music player.
Fig. 6 shows another illustrative embodiment of a music playback system.
Fig. 7 shows a further illustrative embodiment of a music player.

### DESCRIPTION OF EMBODIMENTS

Now discussed are a music player, a corresponding method of operating a music player, and a computer program for carrying out said method, which facilitate aligning the rhythm and/or tempo of played music with the periodicity of physical exercises carried out by a person.

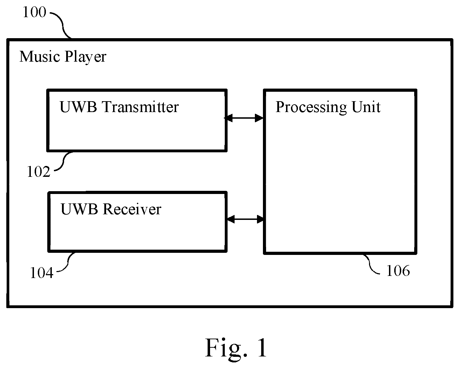

Fig. 1 shows an illustrative embodiment of a music player 100. The music player 100 comprises an ultra-wideband (UWB) transmitter 102, a UWB receiver 104, and a processing unit 106. The UWB transmitter 102 is configured to transmit one or more radar signals. The UWB receiver 104 is configured to receive one or more reflections of said radar signals. Furthermore, the processing unit 106 is configured to determine at least one periodic movement pattern of a person using the reflections of the radar signals, and to select music for playback in dependence on the determined periodic movement pattern of the person. By providing the music player 100 with UWB radar functionality and a processing unit 106 that determines a periodic movement pattern of a person based on reflected UWB radar signals, the rhythm and/or tempo of played music may be aligned more easily with the periodicity of physical exercises carried out by said person.

In one or more embodiments, the periodic movement pattern comprises a tempo and/or rhythm of movement of the person. This further facilitates aligning the rhythm and/or tempo of played music with the periodicity of physical exercises carried out by a person. In one or more embodiments, selecting the music in dependence on the determined periodic movement pattern of the person comprises choosing music having a tempo and/or rhythm that matches the tempo and/or rhythm of movement of the person. In this way, the rhythm and/or tempo of played music may effectively be aligned with the tempo and/or rhythm of movement of the person.

In one or more embodiments, the music player further comprises a storage unit configured to store the music as well as metadata for enabling selecting the music in dependence on the determined periodic movement pattern of the person. In this way, the music that is aligned with the periodicity of physical exercises carried out by the person may easily be identified and selected. Furthermore, in one or more embodiments, the music player further comprises a playback unit, and selecting the music comprises causing the playback unit to play back the music. In this way, the music that is aligned with the periodicity of physical exercises carried out by the person may be played back by the music player itself, without a need for additional equipment. Alternatively or in addition, selecting the music comprises triggering an external playback device to play back the music by transmitting a playback command through the UWB transmitter or through another transmitter. In this way, the music that is aligned with the periodicity of physical exercises carried out by the person may be played back even if the music player itself is not capable or fully capable of playing back said music.

In one or more embodiments, the music player further comprises a generative artificial intelligence (AI) unit, and selecting the music comprises causing the generative AI unit to generate the music in dependence on the determined periodic movement pattern of the person. This further facilitates aligning the rhythm and/or tempo of played music with the periodicity of physical exercises carried out by a person. In particular, the generative AI unit may generate music that is specifically tailored to match the periodicity of physical exercises carried out by the person.

In one or more embodiments, the music player further comprises a single antenna coupled to the UWB transmitter and the UWB receiver. In this way, a practical and inexpensive implementation of the presently disclosed music player may be realized. Alternatively, in one or more embodiments, the music player comprises multiple antennas coupled to the UWB transmitter and the UWB receiver. In this way, an angle of arrival (AoA) may be estimated, which in tum facilitates differentiating between multiple persons at the same distance. In one or more embodiments, the music player further comprises a beamforming unit configured to direct the beam of said antennas toward the person. This increases the directional precision with which the radar signals may be transmitted, which in tum facilitates determining the periodic movement pattern of the person. In a practical realization, the UWB transmitter and the UWB receiver are integrated into a single UWB transceiver module. Alternatively, the UWB transmitter and the UWB receiver may be implemented as separate physical components of the music player. Furthermore, in a practical realization, the music player is implemented as a portable speaker or a smartphone.

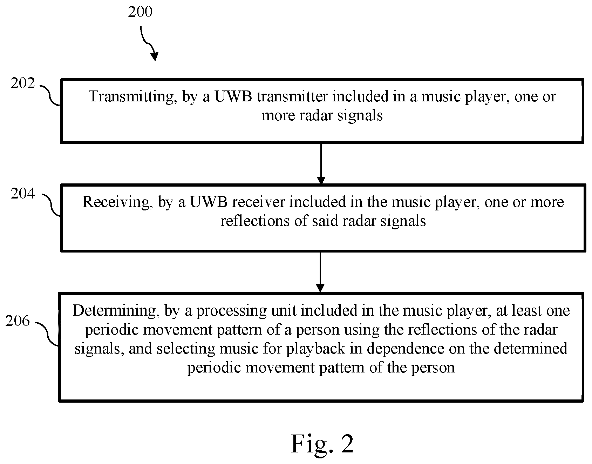

**Fig. 2** shows an illustrative embodiment of a method 200 of operating a music player. The method 200 comprises the following steps. At step 202, a UWB transmitter included in a music player transmits one or more radar signals. At step 204, a UWB receiver included in the music player, one or more reflections of said radar signals. Furthermore, at step 206, a processing unit included in the music player determines at least one periodic movement pattern of a person using the reflections of the radar signals, and selects music for playback in dependence on the determined periodic movement pattern of the person. As mentioned above with reference to the corresponding music player shown in Fig. 1, by providing the music player with UWB radar functionality and a processing unit that determines a periodic movement pattern of a person based on reflected UWB radar signals, the rhythm and/or tempo of played music may be aligned more easily with the periodicity of physical exercises carried out by said person.

In accordance with the present disclosure, a portable music player may be equipped with a UWB radar unit. This UWB radar unit may measure the radar return (i.e., the reflections of transmitted radar signals) from the person who is exercising, and calculate the movement and thus the periodicity of the exercise. This information may then be used to select appropriate music for playback, where the tempo and/or rhythm of the music match the tempo and/or rhythm of the exercising person. This enables the matching of exercise tempo and/or rhythm with the music tempo and/or rhythm without any wom sensors. Furthermore, the presently disclosed method of operating a music player is compatible with many existing exercise methods and equipment, such as treadmills and rowing machines. The music may be selected from an on-device database or playlist, with the music having annotated tempo and/or rhythm information. Furthermore, the music player may have a module that stitches and loops different music tracks together. Alternatively, the music may be played from an external device, e.g., a smartphone or a cloud stream service. In the latter cases, the external device or cloud service may select, stitch and loop music tracks with matching tempos and/or rhythms together. Finally, the portable music player may synthesize matching music using algorithms such as generative AI, in particular with the help of an on-device accelerator such as a neural processing unit (NPU). The portable music player may also have several UWB antennas, and use beamforming to enable a focusing of the UWB radar beam, which may eliminate any need of manual device alignment. In addition, a one-time UWB ranging operation performed with a UWB tracker (e.g., with an on-person tag, a UWB-capable smartphone, or a UWB tracker on the exercise device) may be used to help the beamforming properly focus on the correct person in a more crowded environment (e.g., in a gym). Furthermore, the presently disclosed music player may be implemented in different ways, for example as a portable speaker or as a smartphone having an integrated UWB radar unit.

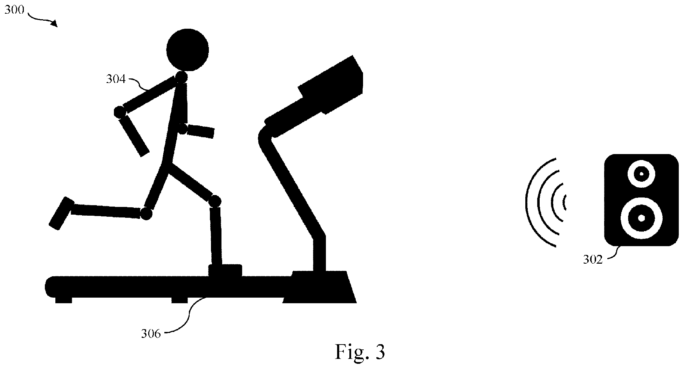

**Fig. 3** shows an illustrative embodiment of a music playback system 300. The system 300 comprises a music player 302 implemented as a portable speaker. The music player 302 comprises a UWB radar unit implemented as a transceiver, by means of which radar signals may be transmitted and reflections of said radar signals may be received. In particular, the radar signals may be reflected by person 304 who is exercising on a treadmill 306. The skilled person will appreciate that at least one periodic movement pattern of the person 304 may be determined on the basis of said reflections. Thus, the music player 302 may comprise a processing unit which is configured to use the radar return to calculate the periodicity of the performed exercises, e.g., the back-and-forth motion of the body, hands, and arms. The computed periodicity may then be used by the processing unit to select music for playback with a matching tempo and/or rhythm, so that the music and exercise speed may effectively be synchronized with each other.

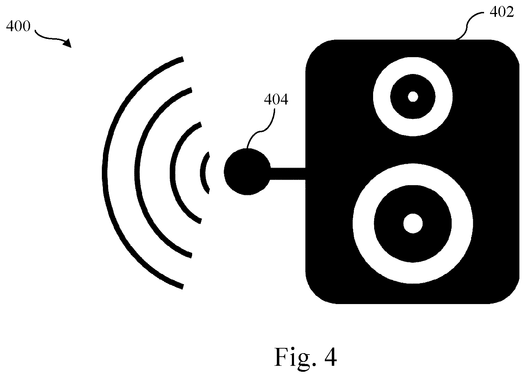

**Fig. 4** shows another illustrative embodiment of a music player 400. In this embodiment, the music player 400 comprises a main body 402 and a single antenna 404. In particular, the antenna 404 may be a fixed antenna, which may be hidden under the enclosure of the music player 400. As mentioned above, by using the single antenna 404 a practical and inexpensive implementation of the music player 400 may be realized. However, in order to achieve a sufficient periodic movement detection accuracy, the music player 400 may have to be aligned manually, such that the antenna 404 is roughly facing the person who is exercising.

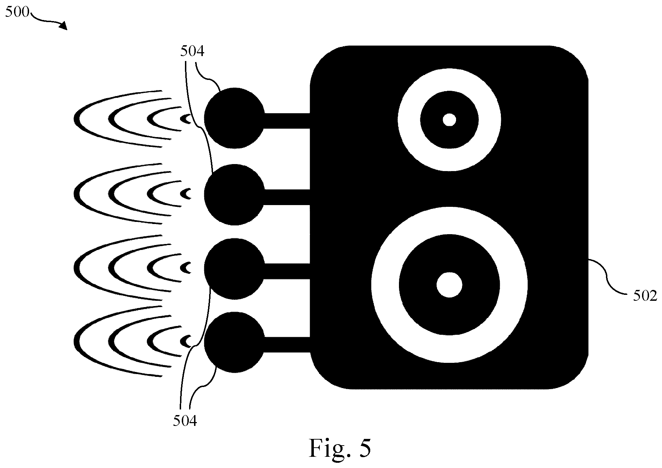

**Fig. 5** shows yet another illustrative embodiment of a music player 500. In this embodiment, the music player 500 comprises a main body 502 and multiple antennas 504. Again, the multiple antennas 504 may be hidden under the enclosure of the music player 500. As mentioned above, by using the multiple antennas 504 the periodic movement pattern of the person may be determined more easily, since the radar signals may be transmitted with a higher directional precision. In this way, a manual alignment may no longer be needed. The use of the multiple antennas 504 may be combined with beamforming to properly steer the UWB radar in the right direction and target the correct person. Due to the wavelength typically used in UWB, the antennas 504 may have to be placed a few centimetres away from one another. However, as typical music players are already larger than this, this may easily be realized.

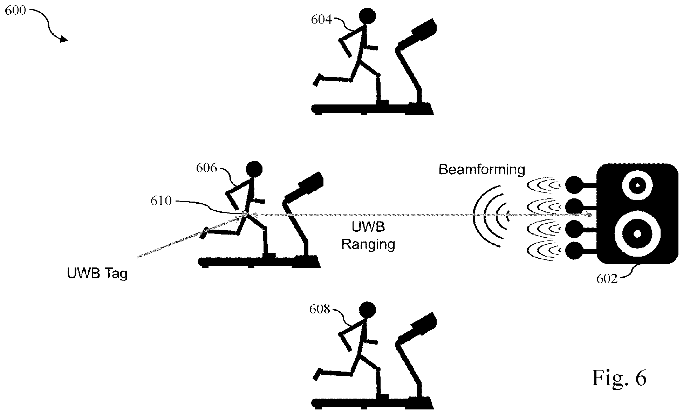

**Fig. 6** shows another illustrative embodiment of a music playback system 600. In this embodiment, the system 600 comprises a music player 602 having multiple antennas, which enable detecting the movement patterns of different persons 604, 606, 608 exercising on a treadmill. The music player 602 is configured to perform beamforming. Furthermore, a wearable UWB tag 610 is used to perform ranging with a selected person 606, so that the beamforming can focus on the correct person 606. It is noted that, once the ranging has been performed, the person 606 no longer has to wear the UWB tag 610, as the relative positions of the music player 602 and exercise device will not change. More specifically, the beamforming may be focused with a variety of different techniques, such as vital sign detection and activity detection. Furthermore, as shown in Fig. 6, UWB ranging may be used to localize the exercising person 606. This may require the person 606 to hold, or have placed close to them, a device capable of UWB ranging, such as the UWB tag 610 or a UWB-enabled smartphone. Once the ranging has been performed, the relative position of the music player 602 and the person 606 has been established, then the UWB ranging device is no longer needed, and no longer has to be worn or held by the person 606. The beamforming algorithm may then use the position information to focus the UWB radar.

Once the periodicity, or more specifically the tempo and/or rhythm, of the exercising person 606 has been determined, matching music may be played. The music may be played back from a local storage unit, in which music tracks are stored together with additional metadata listing the tempo and/or rhythm information as well as corresponding timestamps. The timestamps may be useful, as music tracks frequently change the tempo mid-track. In such a case, the timestamps allow the music player 602 to immediately jump to sections with the correct tempo and/or rhythm. Another option is to use an external source, such as a connected smartphone or a cloud streaming service. The music player 602 may then for example send the desired tempo and/or rhythm information to the external source, and the external source may select an appropriate music track.

A further option is on-device music synthesis. For example, by means of a generative AI model and an on-device neural processing unit (NPU), the music player 602 may generate music with a matching tempo and/or rhythm. Other synthesis methods may for example include a simple periodic tone, similar to a metronome, or a more complex pattern as from a synthesizer. Furthermore, the generative AI model may be used to seamlessly transition between stored music tracks, either when a track ends and a new one with the same tempo and/or rhythm starts, or when the tempo and/or rhythm of the exercising person 606 changes and a new track is selected. In such a case, the generative AI model may synthesize an appropriate transition. Rather than playing the music with its own loudspeaker, the music player 602 may also send the music to an external speaker, such as headphones connected via Bluetooth, or a loudspeaker connected via a cable. For this purpose, the music player 602 may comprise a connectivity module by means of which external speakers may be connected.

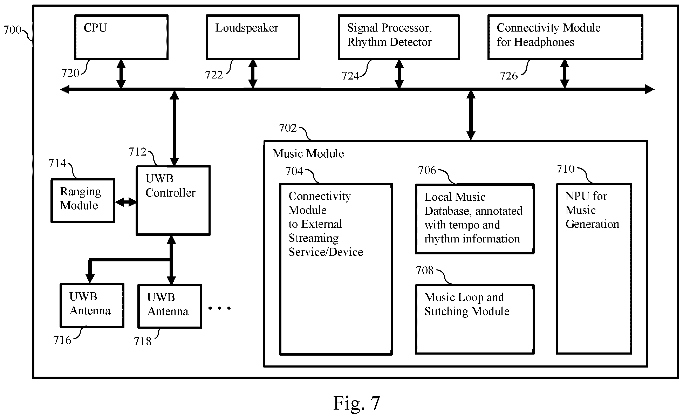

**Fig. 7** shows a further illustrative embodiment of a music player 700. In particular, Fig. 7 shows a non-limiting example of the internal architecture of a music player of the kind set forth above. The music player 700 comprises a music module 702, which in tum comprises a connectivity module 704 to an external streaming service or device, a local music database 706 containing music annotated with tempo and rhythm information, a music loop and stitching module 708, and an NPU 710 for generating music. Furthermore, the music player 700 comprises a UWB controller 712, a ranging module 714, and a plurality of UWB antennas 716, 718. In addition, the music player 700 comprises a central processing unit (CPU) 720, a loudspeaker 722, a signal processor, more specifically a rhythm detector 724, and a connectivity module 726 for headphones. Many of the components shown in Fig. 7 are optional components. For example, in order to implement the presently disclosed music player, it may only be needed to have the UWB controller 712 coupled to a single antenna the rhythm detector 724 and only one of the components of the music module 702, depending on how the matching music will be played back.

The systems and methods described herein may at least partially be embodied by a computer program or a plurality of computer programs, which may exist in a variety of forms both active and inactive in a single computer system or across multiple computer systems. For example, they may exist as software program(s) comprised of executable instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: music player
- 102: ultra-wideband (UWB) transmitter
- 104: UWB receiver
- 106: processing unit
- 200: method of operating a music player
- 202: transmitting, by a UWB transmitter included in a music player, one or more radar signals
- 204: receiving, by a UWB receiver included in the music player, one or more reflections of said radar signals
- 206: determining, by a processing unit included in the music player, at least one periodic movement pattern of a person using the reflections of the radar signals, and selecting music for playback in dependence on the determined periodic movement pattern of the person
- 300: music playback system
- 302: music player
- 304: person
- 306: treadmill
- 400: music player
- 402: main body
- 404: single antenna
- 500: music player
- 502: main body
- 504: multiple antennas
- 600: music playback system
- 602: music player comprising multiple antennas
- 604: person on treadmill
- 606: person on treadmill
- 608: person on treadmill
- 610: UWB tag
- 700: music player
- 702: music module
- 704: connectivity module to external streaming service/device
- 706: local music database, annotated with tempo and rhythm information
- 708: music loop and stitching module
- 710: neural processing unit (NPU) for music generation
- 712: UWB controller
- 714: ranging module
- 716: UWB antenna
- 718: UWB antenna
- 720: central processing unit (CPU)
- 722: loudspeaker
- 724: signal processor, rhythm detector
- 726: connectivity module for headphones

## Claims

1. A music player, comprising:
an ultra-wideband, UWB, transmitter configured to transmit one or more radar signals;
a UWB receiver configured to receive one or more reflections of said radar signals; and
a processing unit configured to determine at least one periodic movement pattern of a person using the reflections of the radar signals, and to select music for playback in dependence on the determined periodic movement pattern of the person.

2. The music player of claim 1, wherein the periodic movement pattern comprises a tempo and/or rhythm of movement of the person.

3. The music player of claim 2, wherein selecting music in dependence on the determined periodic movement pattern of the person comprises choosing music having a tempo and/or rhythm that matches the tempo and/or rhythm of movement of the person.

4. The music player of any preceding claim, further comprising a storage unit configured to store said music as well as metadata for enabling selecting the music in dependence on the determined periodic movement pattern of the person.

5. The music player of any preceding claim, further comprising a playback unit, wherein selecting the music comprises causing the playback unit to play back the music.

6. The music player of any preceding claim, wherein selecting the music comprises triggering an external playback device to play back the music by transmitting a playback command through the UWB transmitter or through another transmitter.

7. The music player of any preceding claim, further comprising a generative artificial intelligence, AI, unit, wherein selecting the music comprises causing the generative AI unit to generate the music in dependence on the determined periodic movement pattern of the person.

8. The music player of any preceding claim, further comprising a single antenna coupled to the UWB transmitter and the UWB receiver.

9. The music player of any one of claims 1 to 7, further comprising multiple antennas coupled to the UWB transmitter and the UWB receiver.

10. The music player of claim 9, further comprising a beamforming unit configured to direct a beam of said antennas toward the person.

11. The music player of any preceding claim, wherein the UWB transmitter and the UWB receiver are integrated into a single UWB transceiver module, or wherein the UWB transmitter and the UWB receiver are implemented as separate physical components of the music player.

12. The music player of any preceding claim, being implemented as a portable speaker or a smartphone.

13. A method of operating a music player, comprising:
transmitting, by an ultra-wideband, UWB, transmitter included in the music player, one or more radar signals;
receiving, by a UWB receiver included in the music player, one or more reflections of said radar signals; and
determining, by a processing unit included in the music player, at least one periodic movement pattern of a person using the reflections of the radar signals, and selecting music for playback in dependence on the determined periodic movement pattern of the person.

14. A computer program comprising executable instructions which, when executed by the music player of any one of claims 1 to 12, cause said music player to execute the method of claim 13.
